# FASCICULE DE BREVET EUROPEEN

(11) **EP 2 307 877 B1**
(45) Date de publication et mention de la délivrance du brevet: **13.11.2019**
(21) Numéro de dépôt: 09784270.2
(22) Date de dépôt: 16.07.2009
(51) Int. Cl.: G01N 21/78, G01N 31/22, G01N 21/77

(54) **PROCÉDÉ DE DÉTECTION DE GROUPEMENTS FONCTIONNELS CARBOXYLIQUES**
VERFAHREN ZUM NACHWEIS FUNKTIONELLER CARBONSÄUREGRUPPEN
METHOD FOR DETECTING CARBOXYLIC FUNCTIONAL GROUPS

(30) Priorité: 25.07.2008 FR 0804266
(43) Date de publication de la demande: 13.04.2011
(73) Titulaire: Université d'Aix Marseille, 13284 Marseille Cedex 07 (FR); Centre National de la Recherche Scientifique, 75016 Paris (FR); INSTITUT NATIONAL DE LA RECHERCHE AGRONOMIQUE, 75007 Paris (FR)
(72) Inventeur: BOUDENNE, Jean-Luc, F-13009 Marseille (FR); COULOMB, Bruno, 13320 Bouc-Bel-Air (FR); DUDAL, Yves, F-68220 Hegenheim (FR); PALACIO-BARCO, Edwin, F-13009 Marseille (FR); ROBERT-PEILLARD Fabien, F-13006 Marseille (FR)
(74) Mandataire: Santarelli
(86) Numéro de dépôt international: PCT/FR2009/000869
(87) Numéro de publication internationale: WO 2010/010242

(56) Documents cités:
- WO-A-03/036260
- US-A- 3 980 433
- KIBLER M ET AL: "New derivatization method for carboxylic acids in aqueous solution for analysis by capillary electrophoresis and laser-induced fluorescence detection" JOURNAL OF CHROMATOGRAPHY, STN, INST. BIOL. CHEM., ACAD. SIN., TAIPEI, TAIWAN, vol. 836, no. 2, 26 mars 1999 (1999-03-26) , pages 325-331, XP004161582 ISSN: 0021-9673
- KOBAYASHI M ET AL: "Water-Soluble Carbodiimide for the Fluorescent Measurement of the Carboxyl Group Produced by Enzyme Reactions" ANALYTICAL BIOCHEMISTRY, ACADEMIC PRESS INC, NEW YORK, vol. 219, no. 2, 1 juin 1994 (1994-06-01), pages 189-194, XP024763270 ISSN: 0003-2697 [extrait le 1994-06-01]
- SANO A ET AL: "Fluorescence quenching properties and chemiluminescence responses of alpha-ketothiols derivatized with o-phthalaldehyde and primary amino compounds." LUMINESCENCE : THE JOURNAL OF BIOLOGICAL AND CHEMICAL LUMINESCENCE 2001 JAN-FEB, vol. 16, no. 1, janvier 2001 (2001-01), pages 25-28, XP002518444 ISSN: 1522-7235
- MONTIGNY PIERRE DE ET AL: "NAPHTHALENE-2,3-DICARBOXALDEHYDE/CYANIDE ION: A RATIONALLY DESIGNED FLUOROGENIC REAGENT FOR PRIMARY AMINES." ANALYTICAL CHEMISTRY 1987 APR 15, vol. 59, no. 8, 15 avril 1987 (1987-04-15) , pages 1096-1101, XP002518446
- MOPPER KENNETH ET AL: "TRACE DETERMINATION OF BIOLOGICAL THIOLS BY LIQUID CHROMATOGRAPHY AND PRECOLUMN FLUOROMETRIC LABELING WITH O-PHTHALALDEHYDE." ANALYTICAL CHEMISTRY 1984 NOV, vol. 56, no. 13, novembre 1984 (1984-11), pages 2557-2560, XP002582235
- HIROSHI NAKAMURA ET AL: "Fluorometric determination of thiols by liquid chromatography with postcolumn derivatization" ANALYTICAL CHEMISTRY, vol. 53, no. 14, 1 décembre 1981 (1981-12-01), pages 2190-2193, XP002582236
- ALI QURESHI G ET AL: "Application of high-performance liquid chromatography to the determination of free amino acids in physiological fluids" JOURNAL OF CHROMATOGRAPHY, ELSEVIER SCIENCE PUBLISHERS B.V, NL, vol. 297, 2 août 1984 (1984-08-02), pages 91-100, XP026685682 ISSN: 0021-9673 [extrait le 1984-08-02]
- DONG M W ET AL: "High-speed liquid chromatographic analysis of amino acids by post-column sodium hypochlorite-o~phthalaldehyde reaction" JOURNAL OF CHROMATOGRAPHY, ELSEVIER SCIENCE PUBLISHERS B.V, NL LNKD- DOI:10.1016/S0021-9673(01)81635-6, vol. 327, 26 juin 1985 (1985-06-26), pages 17-25, XP026479819 ISSN: 0021-9673 [extrait le 1985-06-26]
- CAMERA E ET AL: "Analytical methods to investigate glutathione and related compounds in biological and pathological processes" JOURNAL OF CHROMATOGRAPHY B: BIOMEDICAL SCIENCES & APPLICATIONS, ELSEVIER, AMSTERDAM, NL LNKD- DOI:10.1016/S1570-0232(02)00618-9, vol. 781, no. 1-2, 5 décembre 2002 (2002-12-05), pages 181-206, XP004394154 ISSN: 1570-0232
- JUNG M ET AL: "Trace analysis of fluorescein-derivatized phenoxy acid herbicides by micellar electrokinetic chromatography with laser-induced fluorescence detection", JOURNAL OF CHROMATOGRAPHY, ELSEVIER SCIENCE PUBLISHERS B.V, NL, vol. 717, no. 1, 24 November 1995 (1995-11-24), pages 299-308, XP004038553, ISSN: 0021-9673, DOI: 10.1016/0021-9673(95)00504-8

## Description

L'invention se place dans le domaine de la surveillance de la qualité de l'environnement, en particulier dans l'étude de la qualité des sols, et plus particulièrement encore dans la gestion des déchets et des eaux usées, notamment au sein d'unités de traitement de boues par procédés anaérobies (méthanisation par exemple), dans le cadre de l'exploitation des stations d'épuration biologiques, mais également dans le domaine de la santé.

L'invention concerne un procédé de détection de groupements fonctionnels carboxyliques contenus dans un echantillon.
Le procédé de la présente invention est défini dans la revendication 1.

L'identification de la nature des composés organiques dissous (généralement regroupés sous le terme intégratif de Carbone Organique Dissous, COD) est limitée à une semi-spéciation permettant de déterminer la teneur en composés hydrophiles et hydrophobes (séparation sur résines macroporeuses par filtration de gel puis par ultrafiltration), à estimer un indice d'humification ou, dans le meilleur des cas, en différentes fractions réalisées par extractions séquentielles sur résines ioniques ou non ioniques permettant de définir des teneurs en composés plus ou moins biodisponibles suivant les extractants utilisés.

En aval de ces étapes d'extraction, une caractérisation des groupements fonctionnels est parfois réalisée par analyse spectrale dans le domaine du proche infrarouge (PIR), par Résonance Magnétique Nucléaire du carbone (RMN-C¹³) ou par Pyrolyse couplée à la Chromatographie en phase Gazeuse et détection par Spectrométrie de Masse (Pyr-CG-SM.).

La fonction carboxylique peut être estimée par la quantification séparée des acides aliphatiques à chaîne carbonée courte (acides formique, lactique, pyruvique, propionique, succinique, glycérique et citrique) par chromatographie ionique ou chromatographie liquide généralement couplée à un détecteur conductimétrique ou spectrophotométrique UV-visible. La chromatographie liquide (HPLC) peut également être couplée à des détecteurs de spectrométrie de masse (LC/MS). La chromatographie en phase gazeuse (GC) a également été appliquée, couplée à des détecteurs à ionisation de flamme ou à des spectromètres de masse, les acides carboxyliques étant quantifiés après une étape de dérivation et une étape d'extraction liquide-liquide ou solide-liquide. On peut également citer des couplages plus complexes de type GC/EI-MS (Spectrométrie de masse à impact d'électron), CG/CI-MS (spectrométrie de masse avec ionisation chimique) avec quantification après micro-extraction en phase solide.

Plus récemment, les acides carboxyliques ont été analysés par électrophorèse capillaire (CE). Certaines de ces méthodes peuvent présenter des interférences sérieuses avec des cations métalliques di ou trivalent, qui peuvent être réduites par l'ajout d'EDTA avant analyse. Souza et collaborateurs (S.R. Souza et al. Journal of Chromatography A 796, 335-346, 1998.) ont comparé l'analyse de 7 acides carboxyliques principaux par chromatographie ionique (IC) et électrophorèse capillaire couplées à un détecteur UV et ont conclu que le choix de la méthode analytique dépendait du type d'échantillon analysé, la méthode IC présentant l'inconvénient de mal séparer les différents acides, la méthode CE manquant quant à elle de sensibilité.

Pour améliorer les caractéristiques analytiques de ces méthodes chromatographiques, de nombreux travaux se sont orientés vers la dérivation des acides carboxyliques, afin de former un sous-produit présentant par exemple une fluorescence très intense et permettant une quantification très sensible. Pour atteindre des rendements de dérivation suffisants, il est préalablement nécessaire de procéder à l'activation du groupement carboxylique, à l'aide de réactifs tels que carbodiimides, sels de pyridinium ou disulfites. Pour la dérivation, de nombreux composés fluorescents peuvent être utilisés. Les plus courants sont les bromoalkyles, les diazométhanes, les hydrazines, et les aminés.

On constate donc que la plupart des méthodes de quantification des composés carboxyliques passent par une étape de séparation chromatographique ou électrophorétique. Ceci induit des temps d'analyse relativement long (10 à 30 minutes suivant les méthodes). D'autre part, ces méthodes utilisent un matériel assez complexe d'utilisation et ne pouvant être mis en oeuvre qu'en laboratoire.

Il existe donc un besoin en méthodes d'identification, de caractérisation et de quantification par détection unique des groupements fonctionnels carboxyliques contenus dans un échantillon simples, rapides, peu coûteuses et surtout utilisables sur le terrain sans avoir besoin de mettre en oeuvre des équipements lourds et coûteux.

C'est un des buts de l'invention.

Le procédé de la présente invention, bien que ne permettant pas une quantification séparée de tous les composés carboxyliques contenus dans l'échantillon, permet la quantification globale des groupements fonctionnels visés (concentration totale en acides carboxyliques aliphatiques : Acides Gras Volatils = AGV) et donne en quelques minutes une indication fiable sur la qualité d'une eau, d'un sol ou d'un déchet, ou bien encore l'état de fonctionnement d'un procédé de traitement.

Selon une variante les éléments nécessaires pour l'identification, la caractérisation et la quantification par détection unique des groupements fonctionnels carboxyliques contenus dans un échantillon peuvent être sous forme liquide et alors la plaque pourra être munie de moyen de fermeture des alvéoles, ou encore sous forme lyophilisée.

L'invention a pour objet un procédé de détermination des groupements carboxyliques dans lequel
a. dans une première étape on mélange un échantillon à analyser préalablement prélevé, avec une solution de dissolution dudit échantillon à tester préalablement préparée par mélange d'au moins un tampon, un agent activateur primaire des carbones porteurs des groupements fonctionnels carboxyliques et un agent activateur secondaire, et on incube ce mélange pendant un temps compris entre 4 et 8 minutes, préférentiellement entre 5 et 7 minutes ;
b. dans une seconde étape on ajoute au mélange obtenu à la première étape une amine primaire fluorescente dissoute dans de l'eau ultrapure ;
c. dans une troisième étape on ajoute une base inorganique, pour obtenir un pH compris entre 5,5 et 11 préférentiellement entre 8,0 et 8,5, on agite et on incube ce mélange pendant un temps compris entre 2 et 6 minutes, préférentiellement entre 3 et 5 minutes ;
d. dans une quatrième étape, on ajoute au mélange obtenu à la troisième étape un acide pour obtenir un pH compris entre 1,0 et 7,0, préférentiellement entre 4,5 et 5,0, très préférentiellement un pH de 4,8 et un solvant organique, on agite puis on laisse décanter jusqu'à obtention de la séparation des phases organiques et aqueuses ;
e. dans une cinquième étape on prélève la phase organique obtenue à la quatrième étape et on lui ajoute un tampon pouvant avoir un pH compris entre 4 et 6, préférentiellement entre 4,5 et 5,5 ;
f. dans une sixième étape on mesure la fluorescence de la phase organique obtenue à la cinquième étape, après excitation à une longueur d'onde de 335 nm, et mesure de l'émission induite à une longueur d'onde de 396 nm ;
g. dans une septième étape on reporte la valeur obtenue à la sixième étape sur une courbe étalon préalablement établie dans les mêmes conditions.

Selon l'invention, à la première étape du procédé de détermination des groupements carboxyliques, le tampon de la solution de dissolution de l'échantillon à tester peut être un tampon phosphate à une concentration qui peut être comprise entre 40 mM et 60 mM, préférentiellement entre 45 mM et 55 mM, très préférentiellement 50 mM.

Toujours à la première étape dudit procédé, la solution de dissolution de l'échantillon à tester peut avoir un pH compris entre 2 et 6, préférentiellement entre 4,0 et 5,0, très préférentiellement 4,5.

Toujours à la première étape du procédé de détermination des groupements carboxyliques, l'agent activateur primaire des carbones porteurs des groupements fonctionnels carboxyliques peut être choisi parmi les composés de la famille des carbodiimides, avantageusement parmi le 1-éthyl-3-(3-diméthylaminopropyl)-carbodiimide (EDC) ou le 1-cyclohexyl-3-(2-morpholinoéthyl)carbodiimide métho-para-toluène sulfonate (CMC), ou encore le N,N'-Dicyclohexylcarbodiimide (DCC), du N,N'-Diisopropylcarbodiimide (DIC), le Bis(triméthylsilyl)carbodiimide (BTSC). Préférentiellement l'agent activateur primaire des carbones porteurs des groupements fonctionnels carboxyliques pourra être de l'EDC ou du CMC, très préférentiellement de l'EDC.

Selon l'invention, toujours à ladite première étape, l'agent activateur secondaire de l'agent activateur primaire décrit précédemment, peut être choisi parmi la NHS (N-hydroxysuccinimide) ou la 1-hydroxybenzotriazole (HOBT) ou le tétrafluorophénol (TTP), préférentiellement de l'HOBT.

Selon l'invention, à la seconde étape du procédé de détermination des groupements carboxyliques, l'amine primaire fluorescente peut être à une concentration comprise entre 0 et 6 mg par ml d'échantillon à analyser, préférentiellement entre 0,05 et 2 mg par ml d'échantillon à analyser, très préférentiellement 0,5 mg par ml d'échantillon à analyser, avantageusement mélangé à l'échantillon liquide, à un pH compris entre 5,5 et 11,0, préférentiellement entre 8,0 et 9,0, très préférentiellement 8,5.

Selon l'invention, toujours à la seconde étape du procédé de détermination des groupements carboxyliques, l'amine primaire fluorescente peut être un composé de la famille des benzofurazanes, ou de la famille des aminophénanthrènes, ou de la famille des coumarines, ou de la famille des dérivés "dansyles", du N-1-éthylènediaminonaphthalene (EDAN), ou de la 5-aminofluorescéine (5-AF), ou de la monodansylcadaverine (MDC) ou du chlorure de bleu du Nil (NBCl), préférentiellement de l'EDAN. Ladite amine primaire fluorescente peut être à une concentration comprise entre 0 et 6 mg par ml d'échantillon à analyser, préférentiellement entre 0,05 et 2 mg par ml d'échantillon à analyser, très préférentiellement 0,5 mg par ml d'échantillon à analyser, avantageusement en solution à un pH compris entre 5,5 et 11,0, préférentiellement entre 8,0 et 9,0, très préférentiellement 8,5.

Selon l'invention, à la troisième étape du procédé de détermination des groupements carboxyliques, la base inorganique dont l'utilisation a pour objet de faire varier le pH pour obtenir un pH pouvant être compris entre 7 et 9, préférentiellement entre 8,0 et 8,5, peut être de la soude (NaOH), de la potasse (KOH) ou tout autre hydroxyde alcalin ou alcalinoterreux, préférentiellement de la soude.

Selon l'invention, à la quatrième étape du procédé de détermination des groupements carboxyliques, l'acide peut être un acide inorganique, préférentiellement de l'acide chlorhydrique (HCl).

Toujours à la quatrième étape, le solvant organique peut être du méthyl-tertiobutyl éther (MTBE), de l'acétate d'éthyle, du cyclohexane ou encore du dichlorométhane, préférentiellement du MTBE.

Selon une variante de l'invention, la cinquième étape de prélèvement de la phase organique peut être omise et une lecture directe sur l'échantillon obtenue à la quatrième étape de la fluorescence de cette phase peut être réalisée.

Selon l'invention, à la septième étape du procédé de détermination des groupements carboxyliques, l'acide carboxylique de référence peut être choisi parmi tout acide monocarboxylique, comme par exemple l'acide acétique, l'acide propionique, l'acide butyrique, l'acide valérique, l'acide formique, l'acide lactique, l'acide p-hydroxybenzoique, préférentiellement l'acide acétique.

Selon l'invention, la mesure de la fluorescence qui intervient en fin de procédure d'analyse peut être réalisée sur tout spectrophotomètre à fluorescence, particulièrement sur un lecteur de microplaques tel celui de marque PERKIN ELMER.

Selon l'invention, l'échantillon peut être un échantillon de déchets ou d'eaux usées ou de sols, ou de boues issues d'une unité de traitement de boues par méthanisation, avantageusement dans les procédés anaérobies, un échantillon issu de l'exploitation des stations d'épuration biologiques, ou encore un échantillon issu du domaine de la santé (fluides biologiques tels que des urines, du sang, des échantillons salivaires, de la sueur, ...).
La Figure 1 présente une courbe étalon établie avec de l'acide acétique à des concentrations comprises entre 0,5 et 10 mg/L. La figure présente l'intensité de la fluorescence mesurée à 396 nm après excitation à 335 nm en fonction de la concentration en acide acétique.
La Figure 2 présente la parfaite corrélation entre les mesures réalisées à l'aide du kit selon l'invention et les mesures réalisées selon la méthode standard (détermination de ces acides carboxyliques par HPLC/MS).

D'autres caractéristiques et avantages de l'invention ressortiront mieux des exemples qui suivent, donnés à titre illustratif et non limitatif.

### Exemple 1

On réalise une extraction à l'eau tamponnée à pH 4,5 (tampon phosphate 50 mM) de boues de station d'épuration prélevées à différentes étapes de la méthanisation.

A 1 mL de l'extrait précédent on ajoute 3 mg de HOBT à pH compris entre 3,5 et 4 et 3 mg d'EDC.

Après agitation, on incube le mélange pendant 6 minutes, puis on ajoute 100 µL d'un mélange constitué de 3 mg d'EDAN, 550 µL d'un tampon phosphate pH 5, 50 µL d'HCl 1M et 600 µL de CH₂Cl₂.

On ajoute alors au mélange précédemment obtenu de la soude 1M jusqu'à obtention d'un pH autour de 8,5 et on incube pendant 4 min, et on ajoute de l'acide chlorhydrique 1M jusqu'à obtention d'un pH autour de 4,5-5. On ajoute alors 900 µL de MTBE. Après agitation et décantation, on prélève 600 µL de la phase organique et on lui ajoute 600 µL d'un tampon phosphate à pH 5. Après agitation et décantation, on mesure la fluorescence de la phase organique par excitation à une longueur d'onde de 335 nm et mesure à une longueur d'onde de 396 nm.

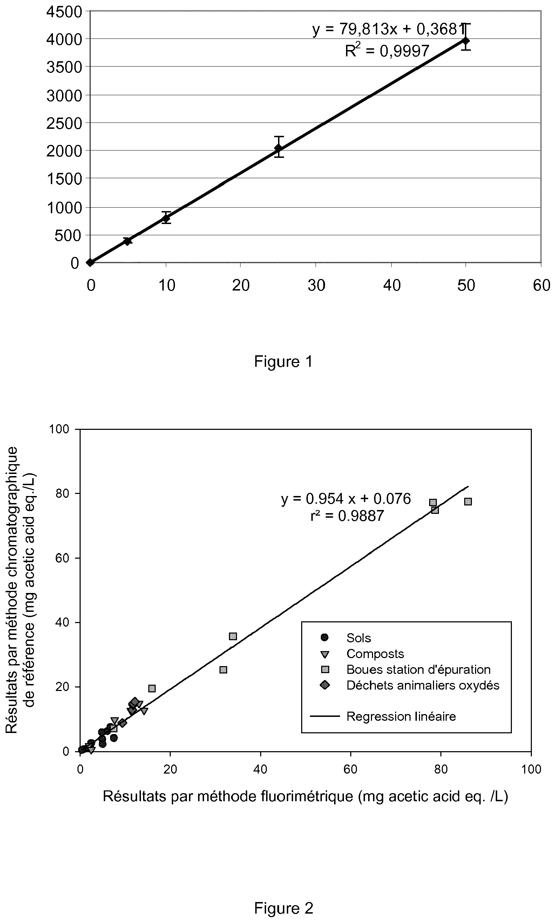

Parallèlement, une courbe de référence est réalisée dans les mêmes conditions que celles auxquelles l'échantillon a été soumis avec de l'acide acétique à des concentrations comprises entre 0,5 et 50 mg/l. Cette courbe étalon est présentée à la Figure 1.

L'intensité de fluorescence de l'échantillon traité comme indiqué précédemment mesurée est divisée par 25 pour la gamme 0,5-50 mg/L. Il est possible de doser des échantillons présentant des concentrations en acides carboxyliques plus élevées en appliquant une dilution plus importante.

La valeur de cette intensité est ensuite reportée sur la courbe étalon (Figure 1) ; il est alors possible d'exprimer le résultat de cette analyse en équivalent acide acétique et donc de déterminer le nombre d'équivalents acide acétique dans l'échantillon.

### Exemple 2

On réalise une extraction à l'eau tamponnée à pH 4,5 (tampon phosphate 50 mM) de différentes natures de sols.

A 1 mL de l'extrait précédent on ajoute 3 mg de HOBT à pH compris entre 3,5 et 4 et 3 mg d'EDC.

Après agitation, on incube le mélange pendant 6 minutes, puis on ajoute 100 µL d'un mélange constitué de 3 mg d'EDAN, 550 µL d'un tampon phosphate pH 5, 50 µL d'HCI 1M et 600 µL de CH₂Cl₂.

On ajoute alors au mélange précédemment obtenu de la soude 1M jusqu'à obtention d'un pH autour de 8,5 et on incube pendant 4 min, et on ajoute de l'acide chlorhydrique 1M jusqu'à obtention d'un pH autour de 4,5-5. On ajoute alors 900 µL de MTBE. Après agitation et décantation, on prélève 600 µL de la phase organique et on lui ajoute 600 µL d'un tampon phosphate à pH 5. Après agitation et décantation, on mesure la fluorescence de la phase organique par excitation à une longueur d'onde de 335 nm et mesure à une longueur d'onde de 396 nm.

Parallèlement, une courbe de référence est réalisée dans les mêmes conditions que celles auxquelles l'échantillon a été soumis avec de l'acide acétique à des concentrations comprises entre 0,5 et 50 mg/l. Cette courbe étalon est présentée à la Figure 1.

L'intensité de fluorescence de l'échantillon traité comme indiqué précédemment-mesurée est divisée par 25 pour la gamme 0,5-50 mg/L. Il est possible de doser des échantillons présentant des concentrations en acides carboxyliques plus élevées en appliquant une dilution plus importante.

La valeur de cette intensité est ensuite reportée sur la courbe étalon (Figure 1) ; il est alors possible d'exprimer le résultat de cette analyse en équivalent acide acétique et donc de déterminer le nombre d'équivalent acide acétique dans l'échantillon.

### Exemple 3

On réalise une extraction à l'eau tamponnée à pH 4,5 (tampon phosphate 50 mM) de différentes natures de composts.

A 1 mL de l'extrait précédent on ajoute 3 mg de HOBT à pH compris entre 3,5 et 4 et 3 mg d'EDC.

Après agitation, on incube le mélange pendant 6 minutes, puis on ajoute 100 µL d'un mélange constitué de 3 mg d'EDAN, 550 µL d'un tampon phosphate pH 5, 50 µL d'HCI 1M et 600 µL de CH₂Cl₂.

On ajoute alors au mélange précédemment obtenu de la soude 1M jusqu'à obtention d'un pH autour de 8,5 et on incube pendant 4 min, et on ajoute de l'acide chlorhydrique 1M jusqu'à obtention d'un pH autour de 4,5-5. On ajout alors 900 µL de MTBE. Après agitation et décantation, on prélève 600 µL de la phase organique et on lui ajoute 600 µL d'un tampon phosphate à pH 5. Après agitation et décantation, on mesure la fluorescence de la phase organique par excitation à une longueur d'onde de 335 nm et mesure à une longueur d'onde de 396 nm.

Parallèlement, une courbe de référence est réalisée dans les mêmes conditions que celles auxquelles l'échantillon a été soumis avec de l'acide acétique à des concentrations comprises entre 0,5 et 50 mg/l. Cette courbe étalon est présentée à la figure 1.

L'intensité de fluorescence de l'échantillon traité comme indiqué précédemment-mesurée est divisée par 25 pour la gamme 0,5-50 mg/L. Il est possible de doser des échantillons présentant des concentrations en acides carboxyliques plus élevées en appliquant une dilution plus importante.

La valeur de cette intensité est ensuite reportée sur la courbe étalon (Figure 1) ; il est alors possible d'exprimer le résultat de cette analyse en équivalent acide acétique et donc de déterminer le nombre d'équivalent acide acétique dans l'échantillon.

Ces 3 exemples illustrent la capacité de la méthode développée à déterminer les teneurs en acides carboxyliques dans des matrices environnementales très variées.

La validation de la méthode a été réalisée par comparaison des résultats obtenus par le kit objet de la présente invention avec les résultats obtenus par la méthode standard (HPLC/MS) de détermination de ces acides carboxyliques (Figure 2). La figure 2 montre la parfaite corrélation entre les mesures réalisées à l'aide du kit selon l'invention et les mesures réalisées selon la méthode standard.

Selon l'invention, l'échantillon peut être un échantillon de déchets ou d'eaux usées ou de sols, ou de boues issues d'une unité de traitement de boues par méthanisation, avantageusement dans les procédés anaérobies, un échantillon issu de l'exploitation des stations d'épuration biologiques, ou encore un échantillon issu du domaine de la santé (fluides biologiques tels que des urines, du sang, des échantillons salivaires, de la sueur, ...).

On comprend bien entendu que l'un des intérêts du kit selon l'invention est qu'il permet de réaliser dans le même temps l'identification, la caractérisation et la quantification par détection unique (fluorescence sur microplaque) des groupements fonctionnels carboxyliques, thiols et amines contenus dans un échantillon.

La Figure 1 présente une courbe étalon établie avec de l'acide acétique à des concentrations comprises entre 0,5 et 10 mg/L. La figure présente l'intensité de la fluorescence mesurée à 396 nm après excitation à 335 nm en fonction de la concentration en acide acétique.

La Figure 2 présente la parfaite corrélation entre les mesures réalisées à l'aide du kit selon l'invention et les mesures réalisées selon la méthode standard (détermination de ces acides carboxyliques par HPLC/MS).

La Figure 3 présente une courbe étalon établie avec de la cystéine à des concentrations comprises entre 0,02 et 1,6 mg/l.

D'autres caractéristiques et avantages de l'invention ressortiront mieux des exemples qui suivent, donnés à titre illustratif et non limitatif.

### Exemple 1

On réalise une extraction à l'eau tamponnée à pH 4,5 (tampon phosphate 50 mM) de boues de station d'épuration prélevées à différentes étapes de la méthanisation.

A 1 mL de l'extrait précédent on ajoute 3 mg de HOBT à pH compris entre 3,5 et 4 et 3 mg d'EDC.

Après agitation, on incube le mélange pendant 6 minutes, puis on ajoute 100 µL d'un mélange constitué de 3 mg d'EDAN, 550 µL d'un tampon phosphate pH 5, 50 µL d'HCI 1 M et 600 µL de CH₂Cl₂.

On ajoute alors au mélange précédemment obtenu de la soude 1M jusqu'à obtention d'un pH autour de 8,5 et on incube pendant 4 min, et on ajoute de l'acide chlorhydrique 1M jusqu'à obtention d'un pH autour de 4,5-5. On ajoute alors 900 µL de MTBE. Après agitation et décantation, on prélève 600 µL de la phase organique et on lui ajoute 600 µL d'un tampon phosphate à pH 5. Après agitation et décantation, on mesure la fluorescence de la phase organique par excitation à une longueur d'onde de 335 nm et mesure à une longueur d'onde de 396 nm.

Parallèlement, une courbe de référence est réalisée dans les mêmes conditions que celles auxquelles l'échantillon a été soumis avec de l'acide acétique à des concentrations comprises entre 0,5 et 50 mg/l. Cette courbe étalon est présentée à la Figure 1.

L'intensité de fluorescence de l'échantillon traité comme indiqué précédemment mesurée est divisée par 25 pour la gamme 0,5-50 mg/L. Il est possible de doser des échantillons présentant des concentrations en acides carboxyliques plus élevées en appliquant une dilution plus importante.

La valeur de cette intensité est ensuite reportée sur la courbe étalon (Figure 1) ; il est alors possible d'exprimer le résultat de cette analyse en équivalent acide acétique et donc de déterminer le nombre d'équivalents acide acétique dans l'échantillon.

### Exemple 2

On réalise une extraction à l'eau tamponnée à pH 4,5 (tampon phosphate 50 mM) de différentes natures de sols.

A 1 mL de l'extrait précédent on ajoute 3 mg de HOBT à pH compris entre 3,5 et 4 et 3 mg d'EDC.

Après agitation, on incube le mélange pendant 6 minutes, puis on ajoute 100 µL d'un mélange constitué de 3 mg d'EDAN, 550 µL d'un tampon phosphate pH 5, 50 µL d'HCI 1M et 600 µL de CH₂Cl₂.

On ajoute alors au mélange précédemment obtenu de la soude 1M jusqu'à obtention d'un pH autour de 8,5 et on incube pendant 4 min, et on ajoute de l'acide chlorhydrique 1M jusqu'à obtention d'un pH autour de 4,5-5. On ajoute alors 900 µL de MTBE. Après agitation et décantation, on prélève 600 µL de la phase organique et on lui ajoute 600 µL d'un tampon phosphate à pH 5. Après agitation et décantation, on mesure la fluorescence de la phase organique par excitation à une longueur d'onde de 335 nm et mesure à une longueur d'onde de 396 nm.

Parallèlement, une courbe de référence est réalisée dans les mêmes conditions que celles auxquelles l'échantillon a été soumis avec de l'acide acétique à des concentrations comprises entre 0,5 et 50 mg/l. Cette courbe étalon est présentée à la Figure 1.

L'intensité de fluorescence de l'échantillon traité comme indiqué précédemment-mesurée est divisée par 25 pour la gamme 0,5-50 mg/L. Il est possible de doser des échantillons présentant des concentrations en acides carboxyliques plus élevées en appliquant une dilution plus importante.

La valeur de cette intensité est ensuite reportée sur la courbe étalon (Figure 1) ; il est alors possible d'exprimer le résultat de cette analyse en équivalent acide acétique et donc de déterminer le nombre d'équivalent acide acétique dans l'échantillon.

### Exemple 3

On réalise une extraction à l'eau tamponnée à pH 4,5 (tampon phosphate 50 mM) de différentes natures de composts.

A 1 mL de l'extrait précédent on ajoute 3 mg de HOBT à pH compris entre 3,5 et 4 et 3 mg d'EDC.

Après agitation, on incube le mélange pendant 6 minutes, puis on ajoute 100 µL d'un mélange constitué de 3 mg d'EDAN, 550 µL d'un tampon phosphate pH 5, 50 µL d'HCl 1M et 600 µL de CH₂Cl₂.

On ajoute alors au mélange précédemment obtenu de la soude 1M jusqu'à obtention d'un pH autour de 8,5 et on incube pendant 4 min, et on ajoute de l'acide chlorhydrique 1M jusqu'à obtention d'un pH autour de 4,5-5. On ajout alors 900 µL de MTBE. Après agitation et décantation, on prélève 600 µL de la phase organique et on lui ajoute 600 µL d'un tampon phosphate à pH 5. Après agitation et décantation, on mesure la fluorescence de la phase organique par excitation à une longueur d'onde de 335 nm et mesure à une longueur d'onde de 396 nm.

Parallèlement, une courbe de référence est réalisée dans les mêmes conditions que celles auxquelles l'échantillon a été soumis avec de l'acide acétique à des concentrations comprises entre 0,5 et 50 mg/l. Cette courbe étalon est présentée à la figure 1.

L'intensité de fluorescence de l'échantillon traité comme indiqué précédemment-mesurée est divisée par 25 pour la gamme 0,5-50 mg/L. Il est possible de doser des échantillons présentant des concentrations en acides carboxyliques plus élevées en appliquant une dilution plus importante.

La valeur de cette intensité est ensuite reportée sur la courbe étalon (Figure 1) ; il est alors possible d'exprimer le résultat de cette analyse en équivalent acide acétique et donc de déterminer le nombre d'équivalent acide acétique dans l'échantillon.

Ces 3 exemples illustrent la capacité de la méthode développée à déterminer les teneurs en acides carboxyliques dans des matrices environnementales très variées.

La validation de la méthode a été réalisée par comparaison des résultats obtenus par le kit objet de la présente invention avec les résultats obtenus par la méthode standard (HPLC/MS) de détermination de ces acides carboxyliques (Figure 2). La figure 2 montre la parfaite corrélation entre les mesures réalisées à l'aide du kit selon l'invention et les mesures réalisées selon la méthode standard.

### Exemple 4

On réalise une extraction à l'eau tamponnée à pH 4,5 (tampon phosphate 50 mM) de boues de station d'épuration prélevées à différentes étapes du procédé d'épuration des eaux usées.

A 1 mL de l'extrait précédent on ajoute 1 mL de TBP préparé à 1% dans le méthanol. Après agitation, on ajoute 2 mL de dichlorométhane et on laisse décanter la phase organique.

Après séparation des phases, on prélève 1,8 mL de la phase aqueuse supérieure et on y ajoute 0,1 mL d'OPA (1,5 mM dans un solvant mixte 99% d'eau et 1% de méthanol) et 0,1 mL de 2-aminoéthanol (3,3 mM dans de l'eau tamponnée à pH 9,5 par du tampon borate). Après agitation et attente de 5 minutes, on mesure la fluorescence du mélange obtenu par excitation à une longueur d'onde de 335 nm et mesure à une longueur d'onde de 450 nm.

Parallèlement, une courbe de référence est réalisée dans les mêmes conditions que celles auxquelles l'échantillon a été soumis avec de la cystéine à des concentrations comprises entre 0,02 et 1,6 mg/l. Cette courbe étalon est présentée à la Figure 3.

L'intensité mesurée de la fluorescence de l'échantillon traité comme indiqué précédemment, est ensuite reportée sur le courbe étalon (Figure 3) ; il est alors possible d'exprimer le résultat de cette analyse en équivalent cystéine et donc de déterminer le nombre d'équivalent cystéine dans l'échantillon.

## Revendications

1. Procédé de détection de groupements fonctionnels carboxyliques contenus dans un échantillon, comprenant les étapes :
i. dans une première étape on mélange un échantillon à analyser préalablement prélevé, avec une solution de dissolution dudit échantillon à tester préalablement préparée par mélange d'au moins un tampon, un agent activateur primaire des carbones porteurs des groupements fonctionnels carboxyliques et un agent activateur secondaire, et on incube ce mélange pendant un temps compris entre 4 et 8 minutes, préférentiellement entre 5 et 7 minutes ;
ii. dans une seconde étape on ajoute au mélange obtenu à la première étape une amine primaire fluorescente dissoute dans de l'eau ultrapure ;
iii. dans une troisième étape on ajoute une base inorganique, pour obtenir un pH compris entre 5,5 et 11 préférentiellement entre 8,0 et 8,5, on agite et on incube ce mélange pendant un temps compris entre 2 et 6 minutes, préférentiellement entre 3 et 5 minutes ;
iv. dans une quatrième étape, on ajoute au mélange obtenu à la troisième étape un acide pour obtenir un pH compris entre 1,0 et 7,0, préférentiellement entre 4,5 et 5,0, très préférentiellement un pH de 4,8. et un solvant organique, on agite puis on laisse décanter jusqu'à obtention de la séparation des phases organiques et aqueuses ;
v. dans une cinquième étape on prélève la phase organique obtenue à la quatrième étape et on lui ajoute un tampon pouvant avoir un pH compris entre 4 et 6, préférentiellement entre 4,5 et 5,5 ;
vi. dans une sixième étape on mesure la fluorescence de la phase organique obtenue à la cinquième étape, après excitation à une longueur d'onde de 335 nm, et mesure de l'émission induite à une longueur d'onde de 396 nm ;
vii. dans une septième étape on reporte la valeur obtenue à la sixième étape sur une courbe étalon préalablement établie dans les mêmes conditions.

2. Procédé selon la revendication 1, **caractérisé en ce que** l'agent activateur primaire des carbones porteurs des groupements fonctionnels carboxyliques est choisi parmi les carbodiimides, avantageusement parmi le 1-éthyl-3-(3-diméthylaminopropyl)-carbodiimide (EDC) ou le 1-cyclohexyl-3-(2-morpholinoéthyl)carbodiimide métho-para-toluène sulfonate (CMC), ou encore le N, N'-dicyclohexylcarbodiimide (DCC), le N,N'-Diisopropylcarbodiimide (DIC), le Bis(triméthylsilyl)carbodiimide (BTSC), et préférentiellement de l'EDC ou du CMC, très préférentiellement de l'EDC.

3. Procédé selon l'une quelconque des revendications 1 ou 2, **caractérisé en ce qu'**il comprend en outre au moins un agent activateur secondaire de l'agent activateur primaire choisi parmi la NHS (N-hydroxysuccinimide) ou du 1-hydroxybenzotriazole (HOBT) ou du tétrafluorophénol (TTP), préférentiellement de l'HOBT.

4. Procédé selon l'une quelconque des revendications 1 à 3, **caractérisé en ce que** l'amine primaire fluorescente est un composé de la famille des benzofurazanes, ou de la famille des aminophénanthrènes, ou de la famille des coumarines, ou de la famille des dérivés dansyles du N-1-éthylènediaminonaphthalene (EDAN), ou de la 5-aminofluorescéine (5-AF), ou de la monodansylcadavérine (MDC) ou du chlorure de bleu du Nil (NBCl), préférentiellement de l'EDAN.

5. Procédé selon l'une quelconque des revendications 1 à 4, **caractérisé en ce que** le solvant d'extraction de l'amine primaire fluorescente est un solvant organique, non miscible à l'eau, comme par exemple du méthyl-tertiobutyl éther (MTBE), de l'acétate d'éthyle, du cyclohexane ou encore du dichlorométhane, préférentiellement du MTBE.

6. Procédé selon l'une quelconque des revendications 1 à 5, **caractérisé en ce que** le modulateur de pH est un tampon borate, un tampon phosphate, un tampon citrate, un tampon organique comme l'HEPES (acide 1-Pipérazineéthane sulfonique) ou encore un tampon TRIS (tris(hydroxyméthyl)aminoéthane), et un tampon phosphate pour la détermination des acides carboxyliques.

7. Procédé selon l'une quelconque des revendications 1 à 6, , **caractérisé en ce que** à la première étape le tampon de la solution de dissolution de l'échantillon à tester est un tampon phosphate à une concentration comprise entre 40 mM et 60 mM, préférentiellement entre 45 mM et 55 mM, très préférentiellement 50 mM.

8. Procédé selon l'une quelconque des revendications 1 à 7, **caractérisé en ce que** à la première étape la solution de dissolution de l'échantillon à tester a un pH compris entre 2 et 6, préférentiellement entre 4,0 et 5,0, très préférentiellement 4,5.

9. Procédé selon l'une quelconque des revendications 1 à 8, **caractérisé en ce que** à la seconde étape l'amine primaire fluorescente est à une concentration comprise entre 0 et 6 mg par ml d'échantillon à analyser, préférentiellement entre 0,05 et 2 mg par ml d'échantillon à analyser, très préférentiellement 0,5 mg par ml d'échantillon à analyser, avantageusement mélangé à l'échantillon liquide, à un pH compris entre 5,5 et 11,0, préférentiellement entre 8,0 et 9,0, très préférentiellement 8,5.

10. Procédé selon l'une quelconque des revendications 1 à 9, **caractérisé en ce que** à la seconde étape l'amine primaire fluorescente est un composé de la famille des benzofurazanes, ou de la famille des aminophénanthrènes, ou de la famille des coumarines, ou de la famille des dérivés "dansyles", du N-1-éthylènediaminonaphthalène (EDAN), ou de la 5-aminofluorescéine (5-AF), ou de la monodansylcadavérine (MDC) ou du chlorure de bleu du Nil (NBCl), préférentiellement de l'EDAN.

11. Procédé selon l'une quelconque des revendications 1 à 10, **caractérisé en ce qu'**à ladite troisième étape, la base inorganique est de la soude (NaOH), de la potasse (KOH) ou tout autre hydroxyde alcalin ou alcalinoterreux, préférentiellement de la soude.

12. Procédé selon l'une quelconque des revendications 1 à 11, **caractérisé en ce qu'**à ladite troisième étape, le pH obtenu est compris entre 7 et 9, préférentiellement entre 8,0 et 8,5.

13. Procédé selon l'une quelconque des revendications 1 à 12, **caractérisé en ce qu'**à ladite quatrième étape, l'acide est un acide inorganique, préférentiellement de l'acide chlorhydrique (HCl).

14. Procédé selon l'une quelconque des revendications 1 à 13, **caractérisé en ce qu'**à la septième étape l'acide carboxylique de référence est choisi parmi tout acide monocarboxylique, comme par exemple l'acide acétique, l'acide propionique, l'acide butyrique, l'acide valérique, l'acide formique, l'acide lactique, l'acide p-hydroxybenzoique, préférentiellement l'acide acétique.

15. Procédé selon l'une quelconque des revendications 1 à 14, **caractérisé en ce que** l'échantillon est un échantillon de déchets ou d'eaux usées ou de sols, ou de boues issues d'une unité de traitement de boues par procédés anaérobies (méthanisation par exemple), un échantillon issu de l'exploitation des stations d'épuration biologiques, ou encore un échantillon issu du domaine de la santé comme un fluide biologique tel que des urines, du sang, des échantillons salivaires, de la sueur.

## Patentansprüche

1. Verfahren zum Nachweisen von in einer Probe enthaltenen funktionellen Carboxylgruppen, das die folgenden Schritte beinhaltet:
i. in einem ersten Schritt Mischen einer zuvor genommenen zu analysierenden Probe mit einer Lösung zum Auflösen der genannten zuvor vorbereiteten zu prüfenden Probe durch Mischen wenigstens eines Puffers, eines primären Aktivators von funktionelle Carboxylgruppen tragenden Kohlenstoffen und eines sekundären Aktivators miteinander, und Inkubieren dieser Mischung für eine Zeitdauer zwischen 4 und 8 Minuten, vorzugsweise zwischen 5 und 7 Minuten;
ii. in einem zweiten Schritt Zugeben eines fluoreszierenden primären Amins, gelöst in Reinstwasser, zu der im ersten Schritt erhaltenen Mischung;
iii. in einem dritten Schritt Zugeben einer anorganischen Base, um einen pH-Wert zwischen 5,5 und 11, vorzugsweise zwischen 8,0 und 8,5 zu erhalten, Rühren und Inkubieren dieser Mischung für eine Zeitdauer zwischen 2 und 6 Minuten, vorzugsweise zwischen 3 und 5 Minuten;
iv. in einem vierten Schritt Zugeben einer Säure zu der im dritten Schritt erhaltenen Mischung, um einen pH-Wert zwischen 1,0 und 7,0, vorzugsweise zwischen 4,5 und 5,0, sehr bevorzugt einen pH-Wert von 4,8, und ein organisches Lösungsmittel zu erhalten, wobei gerührt und dann absetzen gelassen wird, bis die organischen und wässrigen Phasen getrennt sind;
v. in einem fünften Schritt Entnehmen der im vierten Schritt erhaltenen organischen Phase und Zugeben eines Puffers, der einen pH-Wert zwischen 4 und 6, vorzugsweise zwischen 4,5 und 5,5 haben kann;
vi. in einem sechsten Schritt Messen der Fluoreszenz der im fünften Schritt erhaltenen organischen Phase nach Anregung bei einer Wellenlänge von 335 nm und Messen der bei einer Wellenlänge von 396 nm induzierten Emission;
vii. in einem siebten Schritt Übertragen des im sechsten Schritt erhaltenen Wertes in eine Standardkurve, die zuvor unter den gleichen Bedingungen erstellt wurde.

2. Verfahren nach Anspruch 1, **dadurch gekennzeichnet, dass** der primäre Aktivator von funktionelle Carboxylgruppen tragenden Kohlenstoffen ausgewählt ist aus Carbodiimiden, vorteilhafterweise aus 1-Ethyl-3-(3-dimethylaminopropyl)-carbodiimid (EDC) oder 1-Cyclohexyl-3-(2-morpholinoethyl)carbodiimid metho-para-toluolsulfonat (CMC) oder auch N,N'-Dicyclohexylcarbodiimid (DCC), N,N'-Diisopropylcarbodiimid (DIC), Bis(trimethylsilyl)carbodiimid (BTSC), und vorzugsweise EDC oder CMC, sehr bevorzugt EDC.

3. Verfahren nach Anspruch 1 oder 2, **dadurch gekennzeichnet, dass** es ferner wenigstens einen sekundären Aktivator des primären Aktivators umfasst, ausgewählt aus NHS (N-Hydroxysuccinimid) oder 1-Hydroxybenzotriazol (HOBT) oder Tetrafluorphenol (TTP), vorzugsweise HOBT.

4. Verfahren nach einem der Ansprüche 1 bis 3, **dadurch gekennzeichnet, dass** das fluoreszierende primäre Amin eine Verbindung aus der Benzofurazanfamilie oder der Aminophenanthrenfamilie oder der Cumarinfamilie oder der Familie der Dansylderivate von N-1-Ethylendiaminonaphthalin (EDAN) oder 5-Aminofluorescein (5-AF) oder Monodansylcadaverin (MDC) oder Nilblauchlorid (NBCl), vorzugsweise EDAN ist.

5. Verfahren nach einem der Ansprüche 1 bis 4, **dadurch gekennzeichnet, dass** das Lösungsmittel zur Extraktion des fluoreszierenden primären Amins ein mit Wasser nicht mischbares organisches Lösungsmittel wie beispielsweise Methyl-tertiobutylether (MTBE), Ethylacetat, Cyclohexan oder auch Dichlormethan, vorzugsweise MTBE ist.

6. Verfahren nach einem der Ansprüche 1 bis 5, **dadurch gekennzeichnet, dass** der pH-Modulator ein Boratpuffer, ein Phosphatpuffer, ein Citratpuffer, ein organischer Puffer wie HEPES (1-Piperazin-Ethan-Sulfonsäure) oder auch ein TRIS (tris(hydroxymethyl)aminoethan)-Puffer und ein Phosphatpuffer zur Bestimmung von Carbonsäuren ist.

7. Verfahren nach einem der Ansprüche 1 bis 6, **dadurch gekennzeichnet, dass** im ersten Schritt der Puffer der Lösung zum Auflösen der zu prüfenden Probe ein Phosphatpuffer in einer Konzentration zwischen 40 mM und 60 mM, vorzugsweise zwischen 45 mM und 55 mM, sehr bevorzugt von 50 mM ist.

8. Verfahren nach einem der Ansprüche 1 bis 7, **dadurch gekennzeichnet, dass** im ersten Schritt die Lösung zum Auflösen der zu prüfenden Probe einen pH-Wert zwischen 2 und 6, vorzugsweise zwischen 4,0 und 5,0, sehr bevorzugt von 4,5 aufweist.

9. Verfahren nach einem der Ansprüche 1 bis 8, **dadurch gekennzeichnet, dass** im zweiten Schritt das fluoreszierende primäre Amin in einer Konzentration zwischen 0 und 6 mg pro ml zu analysierender Probe, vorzugsweise zwischen 0,05 und 2 mg pro ml zu analysierender Probe, sehr bevorzugt von 0,5 mg pro ml zu analysierender Probe, vorteilhafterweise mit der flüssigen Probe vermischt, bei einem pH-Wert zwischen 5,5 und 11,0, vorzugsweise zwischen 8,0 und 9,0, sehr bevorzugt bei 8,5 liegt.

10. Verfahren nach einem der Ansprüche 1 bis 9, **dadurch gekennzeichnet, dass** im zweiten Schritt das fluoreszierende primäre Amin eine Verbindung aus der Benzofurazanfamilie oder der Aminophenanthrenfamilie oder der Cumarinfamilie oder der Familie der "Dansyl"-Derivate von N-1-Ethylendiaminonaphthalin (EDAN) oder 5-Aminofluorescein (5-AF) oder Monodansylcadaverin (MDC) oder Nilblauchlorid (NBCI), vorzugsweise EDAN ist.

11. Verfahren nach einem der Ansprüche 1 bis 10, **dadurch gekennzeichnet, dass** im genannten dritten Schritt die anorganische Base Soda (NaOH), Kali (KOH) oder ein anderes Alkali- oder Erdalkalimetallhydroxid, vorzugsweise Soda, ist.

12. Verfahren nach einem der Ansprüche 1 bis 11, **dadurch gekennzeichnet, dass** im genannten dritten Schritt der erhaltene pH-Wert zwischen 7 und 9, vorzugsweise zwischen 8,0 und 8,5 liegt.

13. Verfahren nach einem der Ansprüche 1 bis 12, **dadurch gekennzeichnet, dass** im genannten vierten Schritt die Säure eine anorganische Säure, vorzugsweise Salzsäure (HCl) ist.

14. Verfahren nach einem der Ansprüche 1 bis 13, **dadurch gekennzeichnet, dass** im siebten Schritt die Referenzcarbonsäure ausgewählt ist aus einer beliebigen Monocarbonsäure wie beispielsweise Essigsäure, Propionsäure, Buttersäure, Valeriansäure, Ameisensäure, Milchsäure, p-Hydroxybenzoesäure, vorzugsweise Essigsäure.

15. Verfahren nach einem der Ansprüche 1 bis 14, **dadurch gekennzeichnet, dass** die Probe eine Abfall- oder Abwasser- oder Bodenprobe, oder eine Schlammprobe aus einer Schlammbehandlungseinheit durch anaerobe Prozesse (z.B. Methanisierung), eine Probe aus dem Betrieb von biologischen Behandlungsanlagen oder auch eine Probe aus dem Gesundheitsbereich wie eine biologische Flüssigkeit wie Urin, Blut, Speichelproben, Schweiß ist.

## Claims

1. Method for the detection of carboxylic functional groups contained in a sample, comprising the steps:
i. in a first step, a sample to be analyzed, taken beforehand, is mixed with a solution for the dissolution of said sample to be tested, prepared beforehand by mixing at least one buffer, a primary activating agent of the carbons bearing carboxylic functional groups and a secondary activating agent, and this mixture is incubated for a time comprised between 4 and 8 minutes, preferentially between 5 and 7 minutes;
ii. in a second step, a fluorescent primary amine dissolved in ultrapure water is added to the mixture obtained in the first step;
iii. in a third step, an inorganic base is added in order to obtain a pH comprised between 5.5 and 11, preferentially between 8.0 and 8.5, this mixture is stirred and incubated for a time comprised between 2 and 6 minutes, preferentially between 3 and 5 minutes;
iv. in a fourth step, an acid is added to the mixture obtained in the third step in order to obtain a pH comprised between 1.0 and 7.0, preferentially between 4.5 and 5.0, very preferentially a pH of 4.8, and an organic solvent, it is stirred then allowed to decant until separation of the organic and aqueous phases is obtained;
v. in a fifth step, the organic phase obtained in the fourth step is sampled and a buffer that can have a pH comprised between 4 and 6, preferentially between 4.5 and 5.5, is added thereto;
vi. in a sixth step, the fluorescence of the organic phase obtained in the fifth step is measured, after excitation at a wavelength of 335 nm, and measurement of the emission induced at a wavelength of 396 nm;
vii. in a seventh step, the value obtained in the sixth step is transferred to a standard curve established beforehand under the same conditions.

2. Method according to claim 1, **characterized in that** the primary activating agent of the carbons bearing carboxylic functional groups is selected from the carbodiimides, advantageously from 1-ethyl-3-(3-dimethylaminopropyl)-carbodiimide (EDC) or 1-cyclohexyl-3-(2-morpholinoethyl)carbodiimide metho-para-toluene sulphonate (CMC), or also N,N'-dicyclohexylcarbodiimide (DCC), N,N'-diisopropylcarbodiimide (DIC), bis(trimethylsilyl)carbodiimide (BTSC), and preferentially EDC or CMC, very preferentially EDC.

3. Method according to any one of claims 1 or 2, **characterized in that** it also comprises at least one secondary activating agent of the primary activating agent selected from NHS (N-hydroxysuccinimide) or 1-hydroxybenzotriazole (HOBT) or tetrafluorophenol (TTP), preferentially HOBT.

4. Method according to any one of claims 1 to 3, **characterized in that** the fluorescent primary amine is a compound from the family of the benzofurazanes, or the family of the aminophenanthrenes, or the family of the coumarins, or the family of the dansyl derivatives of N-1-ethylenediaminonaphthalene (EDAN), or 5-aminofluorescein (5-AF), or monodansylcadaverine (MDC) or Nile blue chloride (NBCI), preferentially EDAN.

5. Method according to any one of claims 1 to 4, **characterized in that** the extraction solvent of the fluorescent primary amine is an organic solvent, immiscible with water, such as for example methyl-tertiobutyl ether (MTBE), ethyl acetate, cyclohexane or also dichloromethane, preferentially MTBE.

6. Method according to any one of claims 1 to 5, **characterized in that** the pH modulator is a borate buffer, a phosphate buffer, a citrate buffer, an organic buffer such as HEPES (1-piperazineethanesulphonic acid) or also a TRIS (tris(hydroxymethyl)aminoethane) buffer, and a phosphate buffer for the determination of the carboxylic acids.

7. Method according to any one of claims 1 to 6, **characterized in that** in the first step the buffer of the solution for dissolution of the sample to be tested is a phosphate buffer at a concentration comprised between 40 mM and 60 mM, preferentially between 45 mM and 55 mM, very preferentially 50 mM.

8. Method according to any one of claims 1 to 7, **characterized in that** in the first step the solution for dissolution of the sample to be tested has a pH comprised between 2 and 6, preferentially between 4.0 and 5.0, very preferentially 4.5.

9. Method according to any one of claims 1 to 8, **characterized in that** in the second step the fluorescent primary amine is at a concentration comprised between 0 and 6 mg per ml of sample to be analyzed, preferentially between 0.05 and 2 mg per ml of sample to be analyzed, very preferentially 0.5 mg per ml of sample to be analyzed, advantageously mixed with the liquid sample, at a pH comprised between 5.5 and 11.0, preferentially between 8.0 and 9.0, very preferentially 8.5.

10. Method according to any one of claims 1 to 9, **characterized in that** in the second step the fluorescent primary amine is a compound from the family of the benzofurazanes, or the family of the aminophenanthrenes, or the family of the coumarins, or the family of the "dansyl" derivatives of N-1-ethylenediaminonaphthalene (EDAN), or 5-aminofluorescein (5-AF), or monodansylcadaverine (MDC) or Nile blue chloride (NBCI), preferentially EDAN.

11. Method according to any one of claims 1 to 10, **characterized in that** in said third step, the inorganic base is soda (NaOH), potash (KOH) or any other alkaline or alkaline-earth hydroxide, preferentially soda.

12. Method according to any one of claims 1 to 11, **characterized in that** in said third step, the pH obtained is comprised between 7 and 9, preferentially between 8.0 and 8.5.

13. Method according to any one of claims 1 to 12, **characterized in that** in said fourth step, the acid is an inorganic acid, preferentially hydrochloric acid (HCI).

14. Method according to any one of claims 1 to 13, **characterized in that** in the seventh step the reference carboxylic acid is selected from any monocarboxylic acid, such as for example acetic acid, propionic acid, butyric acid, valeric acid, formic acid, lactic acid, p-hydroxybenzoic acid, preferentially acetic acid.

15. Method according to any one of claims 1 to 14, **characterized in that** the sample is a sample of waste or waste water or soil, or sludges originating from a unit for the treatment of sludges by anaerobic methods (methanization for example), a sample originating from the operation of biological treatment plants, or also a sample originating from the field of health such as a biological fluid such as urine, blood, saliva samples, sweat.
